(19) Europäisches Patentamt / European Patent Office / Office européen des brevets

(11) **EP 4 756 616 A1**

(12) **EUROPEAN PATENT APPLICATION**

(43) Date of publication:
**10.06.2026 Bulletin 2026/24**

(21) Application number: **25219464.2**

(22) Date of filing: **28.11.2025**

(51) International Patent Classification (IPC):
***G06F 9/50*** (2006.01)

(52) Cooperative Patent Classification (CPC):
**G06F 9/5016;** G06F 2209/501; G06F 2209/508

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.12.2024 KR 20240178962**

(71) Applicant: **Ulsan National Institute of Science and
Technology
(UNIST)
Eonyang-eup Ulju-gun
Ulsan 44919 (KR)**

(72) Inventors:
• **Baek, Woongki**
  **44919 Ulsan (KR)**
• **SIM, EUNYEONG**
  **44919 Ulsan (KR)**
• **HAN, MYEONGGYUN**
  **44919 Ulsan (KR)**

(74) Representative: **Cabinet Beau de Loménie
103, rue de Grenelle / CS 90800
75340 Paris Cedex 07 (FR)**

(54) **METHOD AND APPARATUS FOR DYNAMICALLY ALLOCATING RESOURCES FOR QUALITY OF SERVICE AWARE AND HIGH-EFFICIENT WORKLOAD CONSOLIDATION IN MULTI-INSTANCE DISAGGREGATED MEMORY SYSTEM**

(57) A method and apparatus for dynamically allocating resources for quality of service (QoS) aware and high-efficient workload consolidation in a multi-instance disaggregated memory system include, using a resource allocator, allocating resources to a latency-critical (LC) application and a batch application included in an application server based on a current system state determined at a preset interval, using a performance monitor, collecting performance data of the LC application and the batch application to which the resources are allocated, using a system state space explorer, exploring a system state based on the collected performance data of the LC application and the batch application, and based on the exploration of the system state, determining a subsequent system state expected to have improved throughput compared to throughput based on the current system state or satisfy the QoS.

FIG. 2

**Description**

CROSS-REFERENCE TO RELATED APPLICATION

This application claims the benefit of Korean Patent Application No. 10-2024-0178962, filed on December 4, 2024, in the Korean Intellectual Property Office, the entire disclosure of which is incorporated herein by reference for all purposes.

BACKGROUND

1. Field of the Invention

One or more embodiments relate to a method of dynamically allocating resources for quality of service (QoS) aware and high-efficient workload consolidation in a multi-instance disaggregated memory system.

2. Description of the Related Art

Computing architectures have evolved from single central processing unit (CPU) cores to "homogeneous computing," which multiplies CPU cores to meet the growing demand for processing power. Furthermore, the rapidly growing fields of big data processing, low-latency online services, and artificial intelligence (AI)/machine learning (ML) tasks require processing large amounts of data. To address this, heterogeneous computing, a computing architecture that integrates accelerators such as graphics processing units (GPUs) and many integrated core (MIC) in addition to CPUs, has been developed to enable faster data processing. This heterogeneous computing, based on memory disaggregation technology, has the characteristic of dynamically utilizing the memory of other accelerators.

The above description has been possessed or acquired by the inventor(s) in the course of conceiving the present disclosure and is not necessarily an art publicly known before the present application is filed.

SUMMARY

According to an embodiment, a method and apparatus for dynamically allocating resources for quality of service (QoS) aware and high-efficient workload consolidation in a multi-instance disaggregated memory system may dynamically allocate link bandwidth of a disaggregated memory server, which is a main cause of performance interference, using a performance monitor, a system state space explorer, and a resource allocator included in the disaggregated memory server.

According to an embodiment, a method and apparatus for dynamically allocating resources for QoS aware and high-efficient workload consolidation in a multi-instance disaggregated memory system may determine an application requiring weight reallocation among a latency-critical (LC) application and a batch application through a system state space explorer based on load and tail latency of the LC application and throughput of the batch application obtained using a performance monitor, and perform the reallocation.

However, the technical goals are not limited to the foregoing goals, and there may be other technical goals.

According to an aspect, there is provided a method of dynamically allocating resources for QoS aware and high-efficient workload consolidation in a multi-instance disaggregated memory system, the method including using a resource allocator, allocating resources to an LC application and a batch application included in an application server based on a current system state determined at a preset interval, using a performance monitor, collecting performance data of the LC application and the batch application to which the resources are allocated, using a system state space explorer, exploring a system state based on the collected performance data of the LC application and the batch application, and based on the exploration of the system state, determining a subsequent system state expected to have improved throughput compared to throughput based on the current system state or satisfy the QoS.

The collecting of the performance data may include, using the performance monitor, collecting load and tail latency of the LC application and using the performance monitor, collecting throughput of the batch application.

The exploring of the system state may include using the system state space explorer, calculating a slack based on the collected tail latency of the LC application and using the system state space explorer, deriving the subsequent system state by providing the slack and the current system state to a getNextSystemState function.

The deriving of the subsequent system state may include based on the slack and the current system state, determining a donor application and a receiver application and reallocating resources based on the current system state and the determined donor application and receiver application.

The determining of the donor application and the receiver application may include based on a candidate donor application for the LC application determined by providing the slack and the current system state to a getCandidateLCDonor function, determining the donor application between the LC application and the batch application and based on a candidate receiver application for the LC application determined by providing the slack and the current system state to a getCandidateLCReceiver function, determining the receiver application between the LC application and the batch application.

The determining of the donor application may include determining, as the donor application, an LC application having a slack that has a greatest value among slacks and exceeds an upper threshold and having an allocated weight that is greater than the minimum weight or when all LC applications have the minimum weight or the slack is less than or equal to the upper threshold, determining the batch application as the donor application.

The determining of the receiver application may include determining, as the receiver application, an LC application having a slack that has a smallest value among slacks and is less than a lower threshold and having an allocated weight that is less than the maximum weight or when all LC applications have the maximum weight or the slack is greater than or equal to the lower threshold, determining the batch application as the receiver application.

The calculating of the slack may include calculating the slack by normalizing a difference between target tail latency and the tail latency.

The method may further include, when the subsequent system state is a first derived system state, adding the subsequent system state to a history buffer.

The method may further include, when the subsequent system state is a previously derived system state, determining the subsequent system state from a history buffer and switching to an idle phase in which only the performance monitor and the resource allocator are executed.

According to another aspect, there is provided an apparatus for dynamically allocating resources for QoS aware and high-efficient workload consolidation in a multi-instance disaggregated memory system, the apparatus including a processor configured to, using a resource allocator, allocate resources to an LC application and a batch application included in an application server based on a current system state determined at a preset interval, using a performance monitor, collect performance data of the LC application and the batch application to which the resources are allocated, using a system state space explorer, explore a system state based on the collected performance data of the LC application and the batch application, and based on the exploration of the system state, determine a subsequent system state expected to have improved throughput compared to throughput based on the current system state or satisfy the QoS.

The processor may be configured to, using the performance monitor, collect load and tail latency of the LC application and using the performance monitor, collect throughput of the batch application.

The processor may be configured to, using the system state space explorer, calculate a slack based on the collected tail latency of the LC application and using the system state space explorer, derive the subsequent system state by providing the slack and the current system state to a getNextSystemState function.

The processor may be configured to, based on the slack and the current system state, determine a donor application and a receiver application and reallocate resources based on the current system state and the determined donor application and receiver application.

The processor may be configured to, based on a candidate donor application for the LC application determined by providing the slack and the current system state to a getCandidateLCDonor function, determine the donor application between the LC application and the batch application and based on a candidate receiver application for the LC application determined by providing the slack and the current system state to a getCandidateLCReceiver function, determine the receiver application between the LC application and the batch application.

The processor may be configured to determine, as the donor application, an LC application having a slack that has a greatest value among slacks and exceeds an upper threshold and having an allocated weight that is greater than the minimum weight or when all LC applications have the minimum weight or the slack is less than or equal to the upper threshold, determine the batch application as the donor application.

The processor may be configured to determine, as the receiver application, an LC application having a slack that has a smallest value among slacks and is less than a lower threshold and having an allocated weight that is less than the maximum weight or when all LC applications have the maximum weight or the slack is greater than or equal to the lower threshold, determine the batch application as the receiver application.

The processor may be configured to calculate the slack by normalizing a difference between target tail latency and the tail latency.

The processor may be configured to, when the subsequent system state is a first derived system state, add the subsequent system state to a history buffer.

The processor may be configured to, when the subsequent system state is a previously derived system state, determine the subsequent system state from a history buffer and switch to an idle phase in which only the performance monitor and the resource allocator are executed.

Additional aspects of embodiments will be set forth in part in the description which follows and, in part, will be apparent from the description, or may be learned by practice of the disclosure.

According to an embodiment, a method and apparatus for dynamically allocating resources for QoS aware and high-efficient workload consolidation in a multi-instance disaggregated memory system may use a performance monitor, a system state space explorer, and a resource allocator included in a disaggregated memory server to dynamically allocate link bandwidth of the disaggregated memory server, which is a main cause of performance interference, thereby assuring the QoS of multiple LC applications and maximizing the throughput of batch applications.

According to an embodiment, a method and apparatus for dynamically allocating resources for QoS aware and high-efficient workload consolidation in a multi-instance disaggregated memory system may determine an application that requires weight reallocation between an LC application and a batch application through a system state space explorer based on load and tail latency of the LC application and throughput of the batch application obtained using a performance monitor, thereby assuring QoS while simultaneously achieving high effective machine utilization (EMU).

BRIEF DESCRIPTION OF THE DRAWINGS

These and/or other aspects, features, and advantages of the invention will become apparent and more readily appreciated from the following description of embodiments, taken in conjunction with the accompanying drawings of which:

FIG. 1 illustrates a block diagram of an apparatus for dynamically allocating resources for quality of service (QoS) aware and high-efficient workload consolidation in a multi-instance disaggregated memory system, according to an embodiment;

FIG. 2 illustrates an example of a functional structure of a disaggregated memory server and an application server including an apparatus for dynamically allocating resources for QoS aware and high-efficient workload consolidation in a multi-instance disaggregated memory system, according to an embodiment;

FIG. 3 illustrates an example of functions related to a virtual lane (VL) of an apparatus for dynamically allocating resources for QoS aware and high-efficient workload consolidation in a multi-instance disaggregated memory system, according to an embodiment;

FIG. 4 illustrates a flowchart of a method of dynamically allocating resources for QoS aware and high-efficient workload consolidation in a multi-instance disaggregated memory system, according to an embodiment; and

FIG. 5 illustrates tail latency and effective machine utilization (EMU) result graphs of a method of dynamically allocating resources for QoS aware and high-efficient workload consolidation in a multi-instance disaggregated memory system, according to an embodiment, a scheme in which all applications share resources, and a scheme of evenly allocating resources to each application group (e.g., an LC application group and a batch application group).

DETAILED DESCRIPTION

The following structural or functional descriptions of embodiments are provided as examples only, and various alterations and modifications may be made to the embodiments. Accordingly, the embodiments are not construed as limited to the disclosure and should be understood to include all changes, equivalents, and replacements within the idea and the technical scope of the disclosure.

Although terms, such as first, second, and the like, may be used herein to describe various components, these terms should be used only to distinguish one component from another component. For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms used herein including technical or scientific terms have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments are described in detail with reference to the accompanying drawings. When describing the embodiments with reference to the accompanying drawings, like reference numerals refer to like elements and a repeated description related thereto will be omitted.

The memory wall, theorized by Wulf and McKee in the 1990s, refers to the fact that the rate of improvement in microprocessor performance far outpaces the rate of improvement in dynamic random-access memory (DRAM) memory speed. The memory wall may cause data transfer bottlenecks between a central processing unit (CPU) and main memory, which may degrade computing performance. A memory capacity wall may be overprovisioning the memory size of each server to cause memory shortages.

Additionally, memory-intensive applications such as widely used big data and artificial intelligence (AI) may have the issue of exacerbating the memory capacity wall. To solve this issue, a disaggregated memory system may be applied to a server. The disaggregated memory system may overcome memory capacity limitations by allowing the use of not only the memory mounted on the disaggregated memory server but also the memory mounted on an application server.

The disaggregated memory system may execute multiple applications together on a server cluster by performing workload consolidation. The applications to be executed may include, for example, a latency-critical (LC) application and a batch application, each of which may have different requirements. The LC application may require quality of service (QoS) aware, while the batch application may require throughput maximization. A multi-instance disaggregated memory system may enable multiple applications to share a single disaggregated memory server and support individual memory spaces for the respective applications, thereby improving memory utilization and reducing costs accordingly. The multi-instance disaggregated memory system may allocate resources to satisfy the requirements of each application, and in this case, performance interference for shared resources between applications may occur. This performance interference may not assure the QoS of an LC application in the multi-instance disaggregated memory system and may degrade the throughput of a batch application.

To solve this issue, a method and apparatus for dynamically allocating resources for QoS aware and high-efficient workload consolidation in a multi-instance disaggregated memory system according to an embodiment may use a performance monitor, a system state space explorer, and a resource allocator included in a disaggregated memory server to dynamically allocate link bandwidth of the disaggregated memory server, which is the main cause of performance interference, thereby assuring the QoS of multiple LC applications and maximizing the throughput of a batch application.

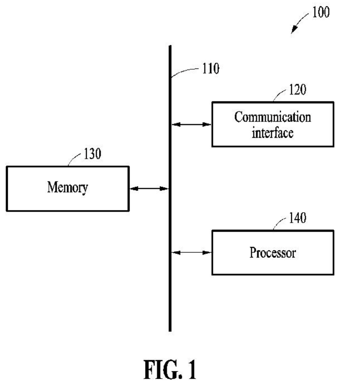

FIG. 1 illustrates a block diagram of an apparatus for dynamically allocating resources for QoS aware and high-efficient workload consolidation in a multi-instance disaggregated memory system, according to an embodiment.

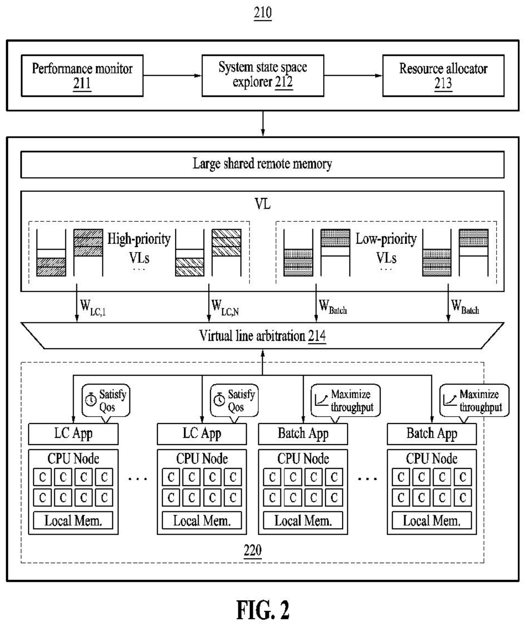

An apparatus 100 may include a bus 110, a communication interface 120, a memory 130, and a processor 140. The apparatus 100 may be a component of a disaggregated memory server that controls the memory of an application server. This is described in detail below with reference to FIG. 2.

Using the bus 110, the device 100 may transmit data and information between the communication interface 120, the memory 130, and the processor 140. The communication interface 120 may not only connect internal components (e.g., the memory 130 and the processor 140) via the bus 110 but also perform communication with an external component (e.g., an application server) using a communication connection such as wired communication, wireless-fidelity (Wi-Fi), or Bluetooth.

The memory 130 may store one or more instructions executable by the processor 140. For example, the instructions may include instructions for executing an operation of the processor 140 and/or an operation of each component of the processor 140.

According to various embodiments, the processor 140 may execute computer-readable code (e.g., software) stored in the memory 130 and instructions triggered by the processor 140. Additionally, the processor 140 may be a hardware-implemented data processing device having a circuit that is physically structured to execute desired operations. The desired operations may include code or instructions included in a program. For example, the hardware-implemented data processing device may include a microprocessor, a CPU, a processor core, a multi-core processor, a multiprocessor, an application-specific integrated circuit (ASIC), and a field-programmable gate array (FPGA).

Using a resource allocator, the processor 140 may allocate resources to an LC application and a batch application included in an application server based on a current system state determined at a preset interval. Using a performance monitor, the processor 140 may collect performance data of the LC application and the batch application to which the resources are allocated, and using a system state space explorer, may explore a system state based on the collected performance data of the LC application and the batch application. The processor 140 may determine, based on the exploration of the system state, a subsequent system state that is expected to have improved throughput compared to throughput based on the current system state and satisfy QoS. The subsequent system state may be a system state determined at a later point in time than the current system state that serves as a reference. For example, when the current interval is n, the subsequent system state may be a system state of interval n+1. The effect of the subsequent system state may vary depending on the current system state. When all LC applications satisfy QoS at interval n, the throughput of a batch application at interval n+1 (e.g., based on the subsequent system state) may be improved compared to interval n. On the other hand, when there is an LC application that does not satisfy QoS at interval n, the LC application may satisfy QoS at interval n+1. How the processor 140 determines the subsequent system state is described in detail below in Table 1.

FIG. 2 illustrates an example of a functional structure of a disaggregated memory server and an application server including an apparatus for dynamically allocating resources for QoS aware and high-efficient workload consolidation in a multi-instance disaggregated memory system, according to an embodiment.

A disaggregated memory server 210 may include the apparatus 100 including a performance monitor 211, a system state space explorer 212, and a resource allocator 213, and virtual lane (VL) arbitration 214. The processor 140 may efficiently control a memory of an application server 220 by influencing the VL arbitration 214 using the performance monitor 211, the system state space explorer 212, and the resource allocator 213 that are stored in the memory 130 and implemented as software. The performance monitor 211 may dynamically measure performance data of applications in the application server 220. The system state space explorer 212 may explore a system state space in the application server 220 and derive a system state that assures the QoS of an LC application and maximizes the throughput of a batch application. The system state space explored by the system state space explorer 212 may be a set including all feasible system states. The resource allocator 213 may allocate the bandwidth of a link connecting the application server 220 to the disaggregated memory server 210. The VL arbitration 214 may control a VL to transmit data between applications within the disaggregated memory server 210 and the application server 220.

The application server 220 may include one or more LC applications and one or more batch applications.

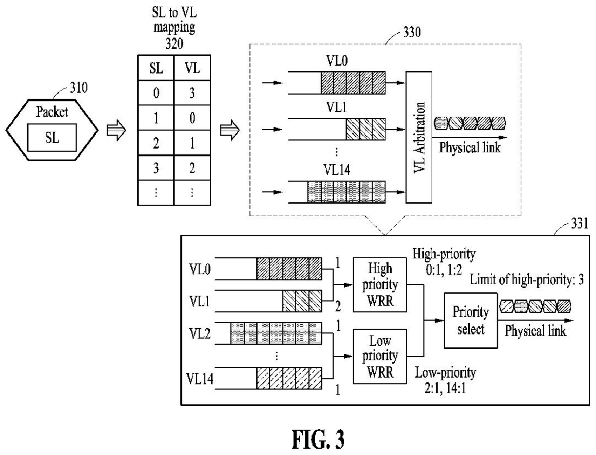

FIG. 3 illustrates an example of functions related to a VL of an apparatus for dynamically allocating resources for QoS aware and high-efficient workload consolidation in a multi-instance disaggregated memory system, according to an embodiment.

A VL is a hardware function that allows a single physical link to be divided into a plurality of virtual links, each of which may have separate, individual send/recv buffers. Such a VL may have functions (e.g., a first function 310, a second function 320, and a third function 330) for QoS aware. The first function 310 may be related to a VL and may have a service level (SL). The SL is a unique identifier (ID) in a switch related to QoS, and 16 SLs may be supported in a packet form. The SL may be mapped a to a VL (the second function 320). There may be up to 15 VLs. Each of the VLs may have transmission priority (e.g., low or high) and a transmission rate set among the VLs through VL arbitration 214 (the third function 330).

An operation of using the VL arbitration 214, which is the third function 330, is described through a box 331. The VL arbitration 214 may determine VL0 to VL14 as either a low or high priority. The VL arbitration 214 may, for example, determine VL0 and VL1 as high priorities and VL2 to VL14 as low priorities. Then, the VL arbitration 214 may perform a weighted round robin (WRR) scheme of selecting a packet to transmit. A weight may be assigned one of the values between 0 and 255. The VL arbitration 214 may, for example, assign VL0 and VL2 to VL14 to 1 and assign VL1 to 2. The determined priority and the assigned weight result for each VL may be expressed in the format of <VL number>:<weight> by priority. For example, high priorities may be expressed as 0:1 and 1:2, and low priorities may be expressed as 2:1 - 14:1. The VL arbitration 214 may transmit a packet based on a limit of high priority (e.g., 3). The limit of high priority may be determined to be one of the values between 0 and 255. For example, that the limit of high priority is determined to be 255 indicates that there is no limit on the number of packets, so forward progress for low priority may not be assured. The VL arbitration 214 may be applied to a multi-instance disaggregated memory system to more reliably ensure service quality and may additionally be used together with the performance monitor 211, the system state space explorer 212, and the resource allocator 213.

Table 1 shows an algorithm in which the processor 140 dynamically allocates resources using the performance monitor 211, the system state space explorer 212, and the resource allocator 213. The processor 140 may periodically perform the algorithm shown in Table 1 to gradually derive an optimal system state and allocate resources accordingly.

[Table 1]

```
 1: phase ← exploration
 2: R ← 0; L ← 0; T ← 0
 3: procedure exploreSystemStateSpace
 4:     H ← initHistoryBuffer()
 5:     s_next ← getInitialState()
 6:     while true do
 7:         s_curr ← s_next
 8:         applySystemState(s_curr)
 9:         sleep(τ)
10:         R ← getLoad()
11:         L ← getTailLatency()
12:         T ← getBatchThroughput()
13:         for A in 𝔸_LC do
14:             slack[A] ← (L_target[A] - L[A]) / L_target[A]
15:         end for
16:         if phase = exploration then
17:             s_next ← getNextSystemState(s_curr, slack)
18:             if s_next ∉ H then
19:                 updateHistoryBuffer(H, s_next)
20:             else
21:                 s_next ← getBestSystemState(H)
22:                 phase ← idle
23:             end if
24:         end if
25:         if needToReadapt() = true then
26:             resetVariables()
27:             s_next ← getInitialState()
28:             phase ← exploration
29:         end if
30:     end while
31: end procedure
```

In line 1, the processor 140 may operate in an exploration phase of an algorithm that is performed periodically. The algorithm may include an exploration phase and an idle phase. In the exploration phase, the processor 140 may execute all of the performance monitor 211, the system state space explorer 212, and the resource allocator 213. In the idle phase, the processor 140 may execute the performance monitor 211 and the resource allocator 213, excluding the system state space explorer 212.

In line 2, the processor 140 may set load R of an LC application, tail latency L, and throughput T of a batch application to 0 zero.

In lines 3 to 5, the processor 140 may use initHistoryBuffer() to retrieve an address H of an initial history buffer and use getInitialState() to retrieve an initial system state (e.g., a current system state) at the address H of the initial history buffer to perform the exploreSystemStateSpace procedure.

In lines 6 to 8, the processor 140 may allocate resources to an LC application and a batch application included in an application server, based on the initial system state obtained through the resource allocator 213. The processor 140 may allocate link bandwidth to each application by setting the priority and weight of a VL through the resource allocator 213. For example, the processor 140 may set the LC application as high priority and the batch application as low priority. Additionally, the processor 140 may set, as a weight, a value based on an initial system state ($s_{curr}$) using applySystemState($s_{curr}$). Here, a system state may be a vector including VL weights respectively allocated to applications. For example, when a system state includes N LC applications and one batch application, the overall system state (s) may be expressed as ($w_{LC1}$, $w_{LC2}$, ..., $w_{LCN}$, $w_{Batch}$). $w_{LCN}$ may represent the weight of the N-th LC application, and $w_{Batch}$ may represent the

7

weight of a batch application.

In lines 9 to 12, the processor 140 may allocate resources based on the initial system state, collect the load (e.g., queries per second (QPS)) and tail latency of the LC application using the performance monitor 211 after $\mathcal{T}$ second(s), and collect the throughput of a batch application using the performance monitor 211. The processor 140 may obtain the load R of the LC application using getLoad() and obtain the tail latency of the LC application using getTailLatency(). The processor 140 may obtain the throughput of the batch application using getBatchThroughput().

Lines 13 to 29 may be performed as the processor 140 executes the system state space explorer 212.

In lines 13 to 15, using the system state space explorer 212, the processor 140 may calculate a slack based on the tail latency of the LC application collected. The processor 140 may calculate a slack (slack[A]) by normalizing the difference between target tail latency and the tail latency. This may be expressed as $(L_{target}[A] - L[A])/L_{target}[A]$.

In lines 16 and 17, the processor 140 may use the system state space explorer 212 to provide the slack (slack[A]) and the current system state ($s_{curr}$) to the getNextSystemState function to derive a subsequent system state ($s_{next}$). The derived subsequent system state may ensure QoS and improve throughput. The getNextSystemState function is described in Tables 2 to 4 below.

In lines 18 and 19, the processor 140 may add the subsequent system state to a history buffer when the subsequent system state is a first derived system state. The processor 140 may update the address H of the history buffer to be stored and the derived subsequent system state ($s_{next}$) by providing the address H of the history buffer and the derived subsequent system state ($s_{next}$) to the updateHistoryBuffer function.

In lines 20 to 22, when the subsequent system state is a previously derived system state, the processor 140 may determine the subsequent system state from the history buffer and switch to an idle phase in which only the performance monitor 211 and the resource allocator 213 are executed. The processor 140 may obtain the subsequent system state by providing, to the getBestSystemState function, the address H of the history buffer in which the previously derived system state is stored.

In lines 25 to 28, the processor 140 may determine whether a re-adaptation operation is required, and when the re-adaptation operation is required, the system state and related variables may be initialized and the exploration (e.g., line 7) may be conducted again. The re-adaptation operation may be an operation of deriving a system state again that satisfies the QoS of an LC application and maximizes the throughput of a batch application when the configuration, load, or the like of a running application changes. For example, when a predetermined application has a high load and is allocated many weights (e.g., resources) through exploration, but then the load decreases, the processor 140 may perform a re-adaptation operation to respond to the decreased load, thereby lowering the weights allocated to the predetermined application to satisfy QoS and maximizing the throughput of the batch application. In addition, when the predetermined application is terminated and the number of applications changes, the processor 140 may perform a re-adaptation operation, because it is necessary to adjust resource allocation quotas to match the changed number of applications.

Tables 2 to 4 show the algorithms for the getNextSystemState function.

[Table 2]

```
 1: procedure getNextSystemState(s_curr, slack)
 2:     A_LC,donor ← getCandidateLCDonor(s_curr, slack)
 3:     A_LC,receiver ← getCandidateLCReceiver(s_curr, slack)
 4:     if A_LC,donor ≠ A_invalid and slack[A_LC,donor] > θ_high then
 5:         donor ← A_LC,donor
 6:     else
 7:         donor ← A_Batch
 8:     end if
 9:     if A_LC,receiver ≠ A_invalid and slack[A_LC,receiver] < θ_low then
10:         receiver ← A_LC,receiver
11:     else
12:         receiver ← A_Batch
13:     end if
14:     if donor ≠ receiver then
15:         s_next ← reallocateWeight(s_curr, donor, receiver)
16:     else
17:         s_next ← s_curr
18:     end if
19:     return s_next
20: end procedure
```

In lines 1 to 3, the processor 140 may preferentially determine a candidate donor application and a candidate receiver application for the LC application to determine a donor application and a receiver application based on the slack and the current system state ($s_{curr}$). The processor 140 may determine the candidate donor application for the LC application by providing the slack and the current system state ($s_{curr}$) to the getCandidateLCDonor function. The algorithm of the getCandidateLCDonor function is shown in Table 3.

In addition, the processor 140 may determine the candidate receiver application for the LC application by providing the slack and the current system state to the getCandidateLCReceiver function. The algorithm of the getCandidateLCReceiver function is shown in Table 4.

In lines 4 and 5, when there is an LC application in which an occupied resources are in a donable state($A_{LC,donor} \neq A_{invalid}$) and that has a slack exceeding an upper threshold ($\theta_{high}$), the processor 140 may determine the LC application as a donor (application).

In lines 6 and 7, the processor 140 may determine a batch application as the donor (application) when all LC applications have a minimum weight ($w_{min}$) or the slack is less than or equal to the upper threshold (for example, when all LC applications are in a state in which the LC applications may not donate resources). The state in which all LC applications may not donate resources may be a state in which all applications have exactly as much resources as all applications need.

In lines 9 and 10, when there is an LC application that is in a state in which additional resources may be allocated ($A_{LC,receiver} \neq A_{invalid}$) and that has a slack less than a lower threshold ($\theta_{low}$), the processor 140 may determine the LC application as the receiver (application).

In lines 11 and 12, when all LC applications have a maximum weight ($w_{max}$) or the slack is greater than or equal to the lower threshold (for example, all LC applications are in a state in which the LC applications may not be allocated additional resources), the processor 140 may determine the batch application as the receiver (application). A state in which all LC applications may not be allocated additional resources may be a state in which all LC applications are allocated sufficient resources.

In lines 14 to 17, the processor 140 may reallocate resources based on the current system state ($s_{curr}$) and the determined donor application and receiver application. When a donor and a receiver are not the same application, the processor 140 may reallocate weights (e.g., resources) by providing the current system state ($s_{curr}$) and the determined donor application and receiver application to the reallocateWeight function. The processor 140 may add and subtract a predetermined amount of resources between the donor and receiver applications using the reallocateWeight function. For example, the processor 140 may subtract the predetermined amount of resources from the donor application and add the same amount of resources to the receiver application. Then, the processor 140 may store a system state with the weight reflected as the system state at a subsequent interval (e.g., interval n+1). Additionally, when the donor and the receiver are the same application, the processor 140 may store the system state at the current interval (e.g., n-th interval) as the system state at the subsequent interval (e.g., n+1-th interval).

[Table 3]

```
 1: procedure getCandidateLCDonor(s_curr, slack)
 2:     A_LC,donor ← A_invalid
 3:     largestSlack ← −∞
 4:     for A in 𝔸_LC do
 5:         if slack[A] > largestSlack and getWeight(s_curr, A) > w_min then
 6:             A_LC,donor ← A
 7:             largestSlack ← slack[A]
 8:         end if
 9:     end for
10:     return A_LC,donor
11: end procedure
```

In lines 4 to 8, the processor 140 may explore an application in a resource surplus state to determine a candidate donor application for the LC application. The processor 140 may determine, as the candidate donor application for the LC application, an LC application having a slack that has the greatest value among slacks and having an allocated weight that is greater than the minimum weight ($w_{min}$).

[Table 4]

```
 1: procedure getCandidateLCReceiver(s_curr, slack)
 2:     A_LC,receiver ← A_invalid
 3:     smallestSlack ← ∞
 4:     for A in 𝔸_LC do
 5:         if slack[A] < smallestSlack and getWeight(s_curr, A) < w_max then
 6:             A_LC,receiver ← A
 7:             smallestSlack ← slack[A]
 8:         end if
 9:     end for
10:     return A_LC,receiver
11: end procedure
```

In lines 4 to 8, the processor 140 may explore an application that is in a resource shortage state and determine a candidate receiver application for the LC application. The processor 140 may determine, as the candidate receiver application for the LC application, an LC application having a slack that has the smallest value among slacks and having an allocated weight that is less than the maximum weight ($w_{max}$).

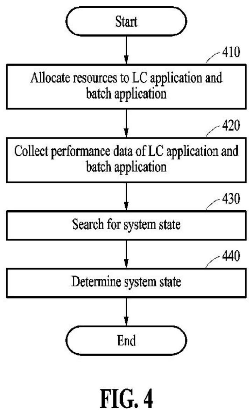

FIG. 4 illustrates a flowchart of a method of dynamically allocating resources for QoS aware and high-efficient workload consolidation in a multi-instance disaggregated memory system, according to an embodiment.

In operation 410, using a resource allocator, a processor may allocate resources to an LC application and a batch application included in an application server based on a current system state determined at a preset interval.

In operation 420, using a performance monitor, the processor may collect performance data of the LC application and the batch application to which the resources are allocated.

In operation 430, using a system state space explorer, the processor may explore a system state based on the collected performance data of the LC application and the batch application.

In operation 440, the processor may determine a subsequent system state that is expected to have improved throughput compared to throughput based on the current system state or satisfy the QoS based on the exploration of the system state.

In operation 420, using the performance monitor, the processor may collect load and tail latency of the LC application, and using the performance monitor, may collect throughput of the batch application.

In operation 430, using the system state space explorer, the processor may calculate a slack based on the tail latency of the LC application collected. The processor may calculate the slack by normalizing the difference between target tail latency and the tail latency. The processor may use the system state space explorer and derive a subsequent system state by providing the slack and the current system state to the getNextSystemState function. In deriving the subsequent system state, the processor may determine a donor application and a receiver application based on the slack and the current system state and reallocate resources based on the current system state and the determined donor application and receiver application.

In determining the donor application and the receiver application, the processor may determine a donor application between the LC application and the batch application based on a candidate donor application for the LC application determined by providing the slack and the current system state to the getCandidateLCDonor function and determine a candidate receiver application for the LC application by providing the slack and the current system state to the getCandidateLCReceiver function. In determining the donor application, the processor may determine, as a donor application, an LC application having a slack that has the greatest value among slacks and exceeds an upper threshold and having an allocated weight that is greater than a minimum weight or may determine the batch application as the donor application when all LC applications have the minimum weight or the slack is less than or equal to the upper threshold. Additionally, in determining the receiver application, the processor may determine, as a receiver application, an LC application having a slack that has the smallest value among slacks and is less than a lower threshold and having an allocated weight that is less than a maximum weight, or may determine the batch application as the receiver application when all LC applications have the maximum weight or the slack is greater than or equal to the lower threshold.

After operation 440, the processor may add the subsequent system state to a history buffer when the subsequent system state is a first derived system state. In another situation in which the subsequent system state is a previously derived system state, the processor may determine the subsequent system state from the history buffer and switch to an idle phase in which only the performance monitor and the resource allocator are executed.

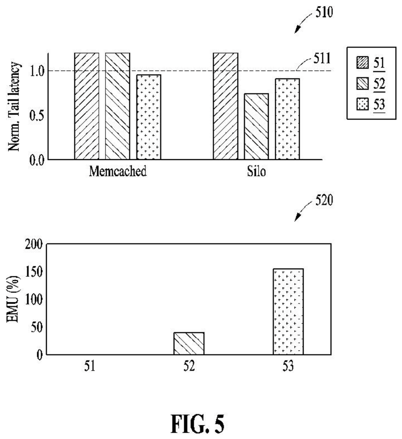

FIG. 5 illustrates tail latency and effective machine utilization (EMU) result graphs of a method of dynamically allocating resources for QoS aware and high-efficient workload consolidation in a multi-instance disaggregated memory system, according to an embodiment, a scheme in which all applications share resources, and a scheme of evenly allocating resources to each application group (e.g., an LC application group and a batch application group).

The structure that implements each method/scheme may include five application servers and one disaggregated memory server. A first bar 51 may represent a result of the scheme in which all applications share resources, and a second bar 52 may represent a result of the scheme of evenly allocating resources to each application group (e.g., the LC application group and the batch application group). A third bar 53 may represent a result of the method of dynamically allocating resources for QoS aware and high-efficient workload consolidation in a multi-instance disaggregated memory system, according to an embodiment.

A first graph 510 shows values obtained by normalizing tail latency for LC applications with different load generators. In the first graph 510, a scheme that produces a value that crosses a line 511 may indicate that QoS is not assured. Accordingly, for Memcached LC applications, the first bar 51 and the second bar 52 indicate that values obtained by normalizing tail latency are greater than 1.0 and that the QoS is not assured, and the third bar 53 indicates that a value obtained by normalizing tail latency is less than 1.0 and that the QoS is assured.

The scheme applied to the first bar 51 also fails to assure QoS for Silo LC applications because performance interference occurs for a disaggregated memory server in all LC applications since all applications share resources. Additionally, the scheme applied to the second bar 52 evenly allocates resources to each application group (e.g., the LC application group and the batch application group) without considering the required amount of resources of LC applications. In the Silo LC applications that require a low amount of resources, the QoS may be assured with the allocated resources, but in the Memcached LC applications that require a high amount of resources, the QoS may not be assured because the amount of the allocated resources are insufficient. On the other hand, the third bar 53 indicates that the QoS is consistently assured no matter which LC application requests resources through the method that allocates as much resources as necessary according to the required amount of resources of LC applications.

Additionally, EMU is an indicator used to quantitatively evaluate system efficiency during workload consolidation. EMU may be calculated based on the throughput of each application and may only be calculated when QoS is assured. Accordingly, in a second graph 520, the first bar 51 that does not assure QoS may be displayed based on an EMU value that is calculated as 0.

When the QoS is assured, EMU may be calculated using $\frac{T_{\text{LC}}}{T_{\text{LC,max}}} + \frac{T_{\text{Batch}}}{T_{\text{Batch,max}}}$. Here, $T_{\text{LC}}$ may represent the throughput (e.g., QPS) of an LC application when the LC application is executed together with a batch application, and $T_{Batch}$ may represent the throughput of the batch application when the batch application is executed together with the LC application. In addition, $T_{LC,max}$ and $T_{Batch,max}$ may represent the throughput of the LC application and the throughput of the batch application, respectively, when each of the LC application and the batch application is executed alone without sharing resources. Accordingly, the second bar 52 may be calculated as 0 because the QoS is not assured in the Memcached LC applications but may be displayed based on an EMU value that is greater than 0 because the QoS is assured in the Silo LC applications. In contrast, the third bar 53 may be displayed based on a high EMU value that is achieved as the method allocates resources enough to assure the QoS to the LC application and allocates the remaining resources to the batch application.

The embodiments described herein may be implemented using a hardware component, a software component and/or a combination thereof. For example, the apparatus, the method, and the components described in the embodiments may be implemented using a general-purpose or special-purpose computer, such as a processor, a controller and an arithmetic logic unit (ALU), a digital signal processor (DSP), a microcomputer, an FPGA, a programmable logic unit (PLU), a microprocessor, or any other devices capable of responding to and executing instructions. A processing device may run an operating system (OS) and software applications that run on the OS. The processing device may also access, store, manipulate, process, and generate data in response to execution of the software. For purpose of simplicity, the description of the processing device is used as singular; however, one skilled in the art will appreciate that the processing device may include a plurality of processing elements and/or multiple types of processing elements. For example, the processing device may include a plurality of processors or a single processor and a single controller. In addition, different processing configurations are possible, such as parallel processors.

The software may include a computer program, a piece of code, an instruction, or one or more combinations thereof, to independently or collectively instruct or configure the processing device to operate as desired. Software and/or data may be stored in any type of machine, component, physical or virtual equipment, or computer storage medium or device capable of providing instructions or data to or being interpreted by the processing device. The software may also be distributed over network-coupled computer systems so that the software is stored and executed in a distributed fashion. The software and data may be stored in a non-transitory computer-readable storage medium.

The method according to the embodiments described above may be recorded in the non-transitory computer-readable storage medium including program instructions to implement various operations of the embodiments described above. The non-transitory computer-readable storage medium may also include, alone or in combination with the program instructions, data files, data structures, and the like. The program instructions recorded on the medium may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) and digital video discs (DVDs); magneto-optical media such as floptical disks; and hardware devices that are specifically configured to store and perform program instructions, such as ROM, RAM, flash memory, and the like. Examples of program instructions include both machine code, such as one produced by a compiler, and files containing higher-level code that may be executed by the computer using an interpreter.

The hardware devices described above may be configured to act as one or more software modules in order to perform the operations of the embodiments described above, or vice versa.

As described above, although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and equivalents to the claims are also within the scope of the following claims.

**Claims**

1. A method of dynamically allocating resources for quality of service "QoS" aware and high-efficient workload consolidation in a multi-instance disaggregated memory system, performed by a processor of a disaggregated memory server, the method comprising:

   using a resource allocator, allocating (410) resources to a latency-critical "LC" application and a batch application comprised in an application server based on a current system state determined at a preset interval;
   using a performance monitor, collecting (420) performance data of the LC application and the batch application to which the resources are allocated;

using a system state space explorer, exploring (430) a system state based on the collected performance data of the LC application and the batch application; and

based on the exploration of the system state, determining (440) a subsequent system state expected to have improved throughput compared to throughput based on the current system state or satisfy the QoS.

2. The method of claim 1, wherein the collecting (420) of the performance data comprises:

using the performance monitor, collecting load and tail latency of the LC application; and
using the performance monitor, collecting throughput of the batch application.

3. The method of claim 2, wherein the exploring (430) of the system state comprises:

using the system state space explorer, calculating a slack based on the collected tail latency of the LC application; and
using the system state space explorer, deriving the subsequent system state by providing the slack and the current system state to a getNextSystemState function.

4. The method of claim 3, wherein the deriving of the subsequent system state comprises:

based on the slack and the current system state, determining a donor application and a receiver application; and
reallocating resources based on the current system state and the determined donor application and receiver application.

5. The method of claim 4, wherein the determining of the donor application and the receiver application comprises:

based on a candidate donor application for the LC application determined by providing the slack and the current system state to a getCandidateLCDonor function, determining the donor application between the LC application and the batch application; and
based on a candidate receiver application for the LC application determined by providing the slack and the current system state to a getCandidateLCReceiver function, determining the receiver application between the LC application and the batch application.

6. The method of claim 5, wherein the determining of the donor application comprises:

determining, as the donor application, an LC application having a slack that has a greatest value among slacks and exceeds an upper threshold and having an allocated weight that is greater than a minimum weight; or
when all LC applications have the minimum weight or the slack is less than or equal to the upper threshold, determining the batch application as the donor application.

7. The method of claim 5, wherein the determining of the receiver application comprises:

determining, as the receiver application, an LC application having a slack that has a smallest value among slacks and is less than a lower threshold and having an allocated weight that is less than a maximum weight; or
when all LC applications have the maximum weight or the slack is greater than or equal to the lower threshold, determining the batch application as the receiver application.

8. The method of claim 3, wherein the calculating of the slack comprises calculating the slack by normalizing a difference between target tail latency and the tail latency.

9. The method of claim 3, further comprising:
when the subsequent system state is a first derived system state, adding the subsequent system state to a history buffer.

10. The method of claim 3, further comprising:
when the subsequent system state is a previously derived system state, determining the subsequent system state from a history buffer and switching to an idle phase in which only the performance monitor and the resource allocator are executed.

11. An apparatus (100) for dynamically allocating resources for quality of service "QoS" aware and high-efficient workload consolidation in a multi-instance disaggregated memory system, the apparatus (100) comprising:
a processor (140) configured to:

using a resource allocator (213), allocate resources to a latency-critical "LC" application and a batch application comprised in an application server based on a current system state determined at a preset interval;
using a performance monitor (211), collect performance data of the LC application and the batch application to which the resources are allocated;
using a system state space explorer (212), explore a system state based on the collected performance data of the LC application and the batch application; and
based on the exploration of the system state, determine a subsequent system state expected to have improved throughput compared to throughput based on the current system state or satisfy the QoS.

12. The apparatus (100) of claim 11, wherein the processor (140) is configured to:

using the performance monitor (211), collect load and tail latency of the LC application; and
using the performance monitor (211), collect throughput of the batch application.

13. The apparatus (100) of claim 12, wherein the processor (140) is configured to:

using the system state space explorer (212), calculate a slack based on the collected tail latency of the LC application; and
using the system state space explorer (212), derive the subsequent system state by providing the slack and the current system state to a getNextSystemState function.

14. The apparatus (100) of claim 13, wherein the processor (140) is configured to:

based on the slack and the current system state, determine a donor application and a receiver application; and
reallocate resources based on the current system state and the determined donor application and receiver application.

15. The apparatus (100) of claim 14, wherein the processor is configured to:

based on a candidate donor application for the LC application determined by providing the slack and the current system state to a getCandidateLCDonor function, determine the donor application between the LC application and the batch application; and
based on a candidate receiver application for the LC application determined by providing the slack and the current system state to a getCandidateLCReceiver function, determine the receiver application between the LC application and the batch application.

FIG. 1

**FIG. 2**

**FIG. 3**

FIG. 4

**FIG. 5**

Europäisches
Patentamt
European
Patent Office
Office européen
des brevets

# EUROPEAN SEARCH REPORT

**Application Number**

EP 25 21 9464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/081742 A1 (HU YONGGANG [CA] ET AL) 12 March 2020 (2020-03-12) * paragraph [0036] - paragraph [0037] * * paragraph [0039] * * paragraph [0042] * * paragraph [0045] * * paragraph [0047] - paragraph [0048] * * figure 4 * | 1-15 | INV. G06F9/50 |
| X | US 2022/124005 A1 (DOSHI KSHITIJ ARUN [US] ET AL) 21 April 2022 (2022-04-21) * paragraph [0032] * * paragraph [0043] * * paragraph [0114]; figure 8 * * paragraph [0146] * * paragraph [0171] - paragraph [0220] * * figures 15-18 * | 1-15 | |
| X | US 2021/406075 A1 (ILLIKKAL RAMESHKUMAR [US] ET AL) 30 December 2021 (2021-12-30) * paragraph [0213] * * paragraph [0221] * * paragraph [0247] * * figures 15A, 15B * | 1-15 | TECHNICAL FIELDS SEARCHED (IPC) G06F |

The present search report has been drawn up for all claims

| Place of search | Date of completion of the search | Examiner |
|---|---|---|
| The Hague | 30 March 2026 | Dieben, Marc |

## ANNEX TO THE EUROPEAN SEARCH REPORT
## ON EUROPEAN PATENT APPLICATION NO.

EP 25 21 9464

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2026

| Patent document cited in search report | | Publication date | Patent family member(s) | | Publication date |
|---|---|---|---|---|---|
| US 2020081742 | A1 | 12-03-2020 | US | 2016062795 A1 | 03-03-2016 |
| | | | US | 2016065492 A1 | 03-03-2016 |
| | | | US | 2017052823 A1 | 23-02-2017 |
| | | | US | 2017054799 A1 | 23-02-2017 |
| | | | US | 2018314560 A1 | 01-11-2018 |
| | | | US | 2018314561 A1 | 01-11-2018 |
| | | | US | 2020081742 A1 | 12-03-2020 |
| | | | US | 2020081743 A1 | 12-03-2020 |
| US 2022124005 | A1 | 21-04-2022 | CN | 117501246 A | 02-02-2024 |
| | | | DE | 102022212115 A1 | 17-05-2023 |
| | | | DE | 102022212157 A1 | 17-05-2023 |
| | | | EP | 4433895 A1 | 25-09-2024 |
| | | | KR | 20230073371 A | 25-05-2023 |
| | | | KR | 20230073372 A | 25-05-2023 |
| | | | US | 2022113790 A1 | 14-04-2022 |
| | | | US | 2022114251 A1 | 14-04-2022 |
| | | | US | 2022116455 A1 | 14-04-2022 |
| | | | US | 2022121455 A1 | 21-04-2022 |
| | | | US | 2022124005 A1 | 21-04-2022 |
| | | | US | 2022124009 A1 | 21-04-2022 |
| | | | US | 2024235959 A1 | 11-07-2024 |
| | | | US | 2025378176 A1 | 11-12-2025 |
| | | | WO | 2023091036 A1 | 25-05-2023 |
| US 2021406075 | A1 | 30-12-2021 | CN | 113849223 A | 28-12-2021 |
| | | | EP | 3929746 A1 | 29-12-2021 |
| | | | KR | 20220001418 A | 05-01-2022 |
| | | | US | 2021406075 A1 | 30-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240178962